# EUROPÄISCHE PATENTSCHRIFT

(11) **EP 1 798 329 B1**
(45) Veröffentlichungstag und Bekanntmachung des Hinweises auf die Patenterteilung: **19.05.2010**
(21) Anmeldenummer: 06023178.4
(22) Anmeldetag: 08.11.2006
(51) Int. Cl.: D21B 1/30, D21B 1/32, D21D 1/38, D21F 1/70

(54) **Verfahren zur Entfernung von Störstoffen aus einer wässrigen Faserstoffsuspension**
Method for removing impurities from an aqueous fibre suspension
Procédé pour enlever des contaminants d'une suspension aqueuse de fibres

(30) Priorität: 17.12.2005 DE 102005060475
(43) Veröffentlichungstag der Anmeldung: 20.06.2007
(73) Patentinhaber: Voith Patent GmbH, 89522 Heidenheim (DE)
(72) Erfinder: Britz, Herbert, 88250 Weingarten (DE); Canga-Rodriguez, José, 88212 Ravensburg (DE); Dockal-Baur, Jürgen, 88273 Fronreute-Fronhofen (DE); Hess, Harald, 88287 Grünkraut (DE); Kemper, Martin, 88250 Weingarten (DE); Lüdtke, Oliver, 88376 Königseggwald (DE); Selder, Harald, 88281 Schlier (DE)

(56) Entgegenhaltungen:
- EP-A- 0 653 510
- EP-A1- 0 538 603
- DE-A- 10 132 743
- DE-A- 10 236 962
- DE-A- 10 256 519

## Beschreibung

Die Erfindung betrifft ein Verfahren zur Entfernung von Störstoffen aus einer wässrigen Faserstoffsuspension gemäß dem Oberbegriff des Anspruchs 1, wie es z.B. aus DE 102 565 19 A1 oder EP 0 538 603 A1 bekannt ist.

Verfahren der genannten Art werden verwendet, um aus einer Papierfasersuspension zumindest einen Teil der darin suspendierten unerwünschten Feststoffteilchen, sogenannte Störstoffe, auszuscheiden. Bekanntlich wird bei einer Flotation ein mit auszuscheidenden Stoffen enthaltender Schaum oder Schwimmschlamm gebildet. Ein typischer Anwendungsfall eines derartigen Verfahrens ist die Aufbereitung von einer aus bedrucktem Altpapier gewonnenen wässrigen Fasersuspension, in der die Druckfarbenpartikel bereits von Fasern abgelöst sind, so dass sie sich ausflotieren lassen. Der hier beschriebene Flotationsvorgang nutzt die Unterschiede zwischen Papierfaserstoff und unerwünschten Feststoffteilchen in der Art, dass der Faserstoff auf Grund seines eher hydrophilen Charakters in der Fasersuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Da durch das hier angesprochene Flotationsverfahren Fasern von Verunreinigungen (beides sind Feststoffe) getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Weit verbreitet sind Verfahren mit zwei aufeinander folgenden Flotationsschritten, zwischen denen eine mechanische Behandlung durchgeführt wird. So ist aus dem Fachaufsatz Herbert Britz "Flotationsdeinking - Grundlagen und Systemeinbindung", Wochenblatt für Papierfabrikation 10, 1993, Seiten 394 - 401, bekannt, zunächst eine "Flotation I", dann eine Hochkonsistenz-Dispergierung für deren Gutstoff und dann eine "Flotation II" zur Entfernung der beim Dispergieren von der Faser abgelösten Druckfarben zu verwenden.

Solche Verfahren sind sehr wirksam, aber relativ aufwändig, da jeder Teilschritt eine vollständige selektive Flotation für den gesamten Papierfaserstoff enthält.

Der Erfindung liegt die Aufgabe zu Grunde, ein Aufbereitungsverfahren zu schaffen, mit dem eine möglichst effektive Ausscheidung der Störstoffpartikel erzielbar ist, ohne dass ein zu hoher apparativer und betriebsmäßiger Aufwand benötigt wird.

Diese Aufgabe wird durch die kennzeichnenden Merkmale des Anspruchs 1 in vollem Umfang gelöst.

Das erfindungsgemäße Verfahren nutzt die Möglichkeiten, die sich daraus ergeben, dass ein Teil der Faserstoffsuspension dispergiert wird, und zwar der, der auf Grund seiner Beschaffenheit höhere Anforderungen an die Flotation stellt. Nach der Dispergierung ist er mit weniger Aufwand durch Flotation zu reinigen, so dass er sich diesbezüglich ähnlich verhält wie der andere Teil der Faserstoffsuspension.

Typischerweise wird das Verfahren an Altpapiersuspensionen angewandt. Ein solches Ausgangsmaterial enthält ein Gemisch von verschiedenen Fasern und Verunreinigungen. Von diesem Gemisch wird durch die Fraktionierung nur ein geringer Anteil an Farb- und/oder Füllstoffen in die Grobfraktion überführt, während die Feinfraktion größere Mengen der flotierbaren Störstoffe enthält und mit Faserfeinstoff und eventuell Kurzfasern angereichert ist. In einer so gebildeten Feinfraktion sind die Flotationsbedingungen signifikant günstiger als in der Faserstoffsuspension vor der Fraktionierung. Das gilt auch dann noch, wenn die dispergierte Grobfraktion zugemischt wurde. Die Flotation der dispergierten Grobfraktion zusammen mit der Feinfraktion kann auch z.B. mit höherer Konsistenz zu einem guten Ergebnis gebracht werden. Bei Anwendung des erfindungsgemäßen Verfahrens kann ohne weiteres bei ca. 1,5 % oder mehr flotiert werden, während z.B. die übliche Vollstromflotation bei einer Konsistenz von ca. 1,0 - 1,3 % durchgeführt wird. Andere Einflussmöglichkeiten auf die Flotation bieten z.B. Variationen der Chemikaliendosierung, Luftblasenmenge oder Anlagengröße.

Die Erfindung und ihre Vorteile werden erläutert an Hand von Zeichnungen. Dabei zeigen:
- Figur 1:: Ein exemplarisches Schema des erfindungsgemäßen Verfahrens;
- Figur 2:: Eine Variante des Verfahrens;
- Figur 3:: Schematisch: Eine erfindungsgemäße Anlage für das in Fig. 2 gezeigte Verfahren;
- Figur 4:: Schematisch: Eine variierte Anlage;
- Figur 5 - 9:: Je eine weitere Variante des Verfahrens.

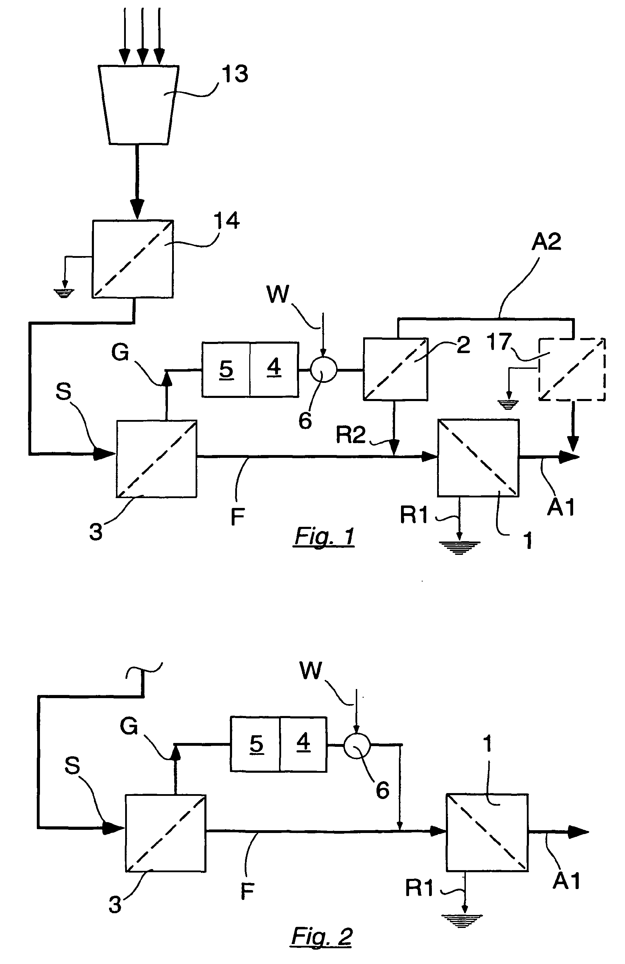

Fig. 1 zeigt ein einfaches Schema, bei dem aus Altpapier in einem Stofflöser 13 eine Faserstoffsuspension gebildet wird. Es folgt eine mechanische Reinigungsanlage 14 zur Ausscheidung von Verunreinigungen, die in der Regel Siebmaschinen und/oder Zentrifugalabscheider, z.B. Hydrozyklone, aber noch keine Flotationsanlage zum Deinken umfasst. Die so erzeugte vorgereinigte wässrige Faserstoffsuspension S wird als nächstes einer Fraktionierung 3 zugeführt. Bei einer ersten Ausführungsform des Verfahrens werden die Fasern, die signifikant länger, eventuell auch steifer als die übrigen Fasern sind, in die Grobfraktion G geführt, während die Kurzfasern, Feinstoffe, Füllstoffe und feine Störstoffpartikel in die Feinfraktion F gelangen. Diese Betrachtung erfasst nur die Feststoffe; die Flüssigkeit, also überwiegend Wasser, fließt mit beiden Fraktionen ab. Dabei können sich Verschiebungen der Konsistenz ergeben, und zwar normalerweise so, dass die Feinfraktion F eine geringere Konsistenz hat als die Grobfraktion G. Wie die Fig. 1 zeigt, wird die Feinfraktion F in eine Flotation 1 geführt und dort in der an sich bekannten Weise von Störstoffen gereinigt. Diese Flotation 1 ist bezüglich ihrer Betriebsparameter auf eine mit Kurzfasern und/oder Feinstoffen besonders angereicherte Suspension abgestimmt. Die Vorgänge bei der Flotation 1 sind bekannt; es wird ein Flotationsschaum R1 gebildet, der einen großen Teil der Störstoffe enthält, sowie ein gereinigter Gutstoff A1 mit dem überwiegenden Teil der Fasern.

Die Grobfraktion G der Fraktionierung 3 wird durch eine Eindickung 5 auf höhere Konsistenz gebracht, vorzugsweise zwischen 15 % und 25 %, erfährt dann eine Dispergierung 4 und anschließend eine Verdünnung 6 mit Wasser W, z.B. auf etwa 1 bis 1,5 % Konsistenz. Bekanntlich ist der Hauptzweck einer Dispergierung 4 in einer solchen Anwendung die Ablösung von an den Fasern haftenden Störstoffen. Eventuell können auch weitere mit Dispergern erzielbare Effekte, wie z.B. Auflösung der Reststippen, damit verbunden sein. Der dispergierte und verdünnte Stoff gelangt hier dann in eine Wäsche 2, die so eingestellt ist, dass das Filtrat R2 die flotierbaren feinen Störstoffe abführt. Diese werden dann in der Flotation 1 zusammen mit den im Filtrat F enthaltenen feinen Störstoffen entfernt. Der Gutstoff A2 (Dickstoff) aus der Wäsche 2 ist oft zur Papiererzeugung ausreichend sauber. Falls nicht, kann er in einer zusätzlichen selektiven Flotation 17 (gestrichelt gezeichnet) nachbehandelt werden. Wie sich aus der Fig. 1 ergibt, ist diese zusätzliche selektive Flotation 17 im Aufbereitungsverlauf des Verfahrens nicht vor der selektiver Flotation 1 angeordnet.

In einer besonders vorteilhaften Ausführungsform des Verfahrens, auf die später noch eingegangen wird, kann die Fraktionierung 3 so durchgeführt werden, dass alle Fasern oder ein sehr großer Teil von ihnen in die Grobfraktion G gelangt. Die Feinfraktion F enthält dann wenig Fasern (auch wenig Kurzfasern) aber einen großen Teil der organischen und anorganischen Feinstoffe einschließlich der zu flotierenden Störstoffe. Dabei sind Aufteilungen möglich und sinnvoll, bei denen z.B. bis zu 50 % des im Einlauf zur Fraktionierung 3 zugeführten Feststoffes in die Feinfraktion F gelangen. Je nach Anforderungen und Rohstoffen können auch kleinere Werte von Vorteil sein. Andererseits ist auch ein Minimum an Feststoffen in der Feinfraktion F erforderlich, z.B. 5 bis 10 %, damit nicht ein Filterprozess, sondern eine Fraktionierung ausgeführt wird. Der Anteil der Fasern wird in der Regel als Rückstand des Siebes R 100 nach Bauer-McNett ermittelt (Labor-Methode nach TAPPI Standard T 233). Feinstoffe fallen in derselben Analyse als Durchlauf des 100 mesh-Siebes an.

In Fig. 2 ist eine gegenüber der gemäß Fig. 1 vereinfachte Ausführungsform gezeigt, bei der die dispergierte und danach wieder verdünnte Grobfraktion G zusammen mit der Feinfraktion F direkt in die Flotation 1 geführt wird. Das kann von Vorteil sein, wenn nicht sicher ist, dass bei der in Fig. 1 gezeigten Wäsche 2 die Störstoffe in gewünschtem Maße in das Filtrat gelangen. Andererseits wird die Flotation durch die vermehrten Fasern, insbesondere Langfasern, wieder etwas aufwändiger.

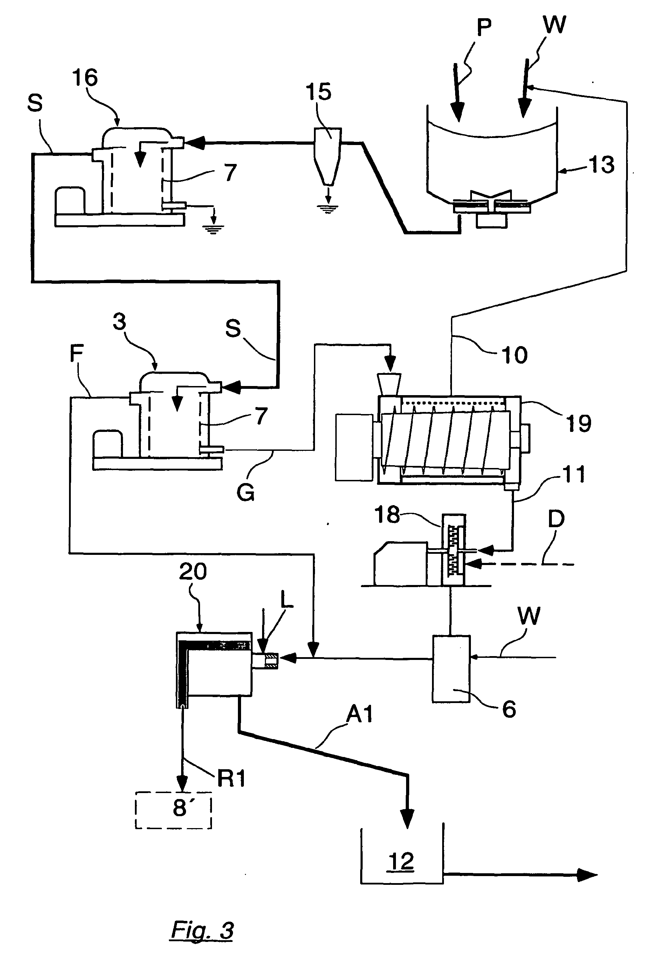

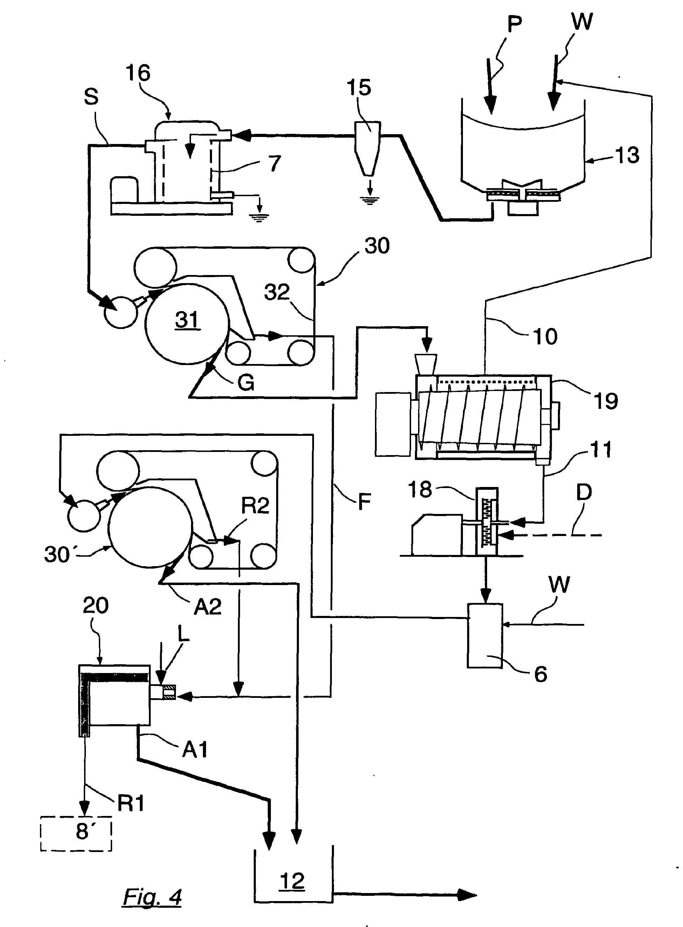

Die Fig. 3 und 4 zeigen etwas detailliertere Darstellungen jeweils einer für das Verfahren benutzbaren Anlage, ohne dass hier konkrete maschinelle Ausgestaltungen entnehmbar wären. Dabei wird eine Faserstoffsuspension in einem Stofflöser 13 gebildet, über Hydrozyklon 15 sowie Sortierer 16 mechanisch gereinigt und dann einer Fraktionierung 3 zugeführt. Gemäß Figur 3 wird für die Fraktionierung 3 eine Nasssiebmaschine von der Art eines Drucksortierers verwendet, der entsprechend den Anforderungen einer Fraktionierung ausgestattet und betrieben wird. Er soll also nicht zur Abtrennung von Schmutzstoffen dienen, bei der möglichst alle Fasern in den Durchlauf gelangen. Anders als bei der Schmutzstoffentfernung ("Sortierung") besteht also bei der Fraktionierung auch der Überlauf zu einem großen Teil aus Fasern. Die Faserstoffsuspension S wird in das Innere des Gehäuses eines solchen Drucksortierers eingepumpt und mit Hilfe eines Siebkorbes 7 fraktioniert. Die zur Fraktionierung im Drucksortierer erforderlichen Parameter sind an sich bekannt; die wichtigsten sind Form und Größe der Sieböffnungen, Konsistenz der Suspension, Überlaufrate und Art der Siebräumung. Typische Sieböffnungen sind Rundlöcher im Bereich zwischen 0,2 und 0,5 mm oder Schlitze zwischen 0,1 und 0,3 mm.

Durch Wahl der Vorrichtungen und Betriebsbedingungen zur Realisierung der Fraktionierung 3 lässt sich die Aufteilung des Faserstoffes in Grob- und Feinfraktion einstellen. Dabei kann es von besonderem Vorteil sein, die Fraktionierung 3 so vorzunehmen, dass möglichst viele Fasern, seien sie nun kurz oder lang, in die Grobfraktion G gelangen und die Feinfraktion F im Wesentlichen die auszusortierenden Schmutzstoffe, anorganische Feinstoffe (Füllstoffe) und organische Feinstoffe (Faserfeinstoff) enthält. Eine solche spezielle Fraktionierung wird bei einem gemäß Fig. 3 verwendeten Drucksortierer durch relativ geringe Konsistenz begünstigt, wobei für die Sieböffnungen eher relativ kleine Werte, also z.B. ca. 0,2 mm Loch oder 0,1 mm Schlitz, zu wählen sind. Die Überlaufrate wäre relativ hoch, z.B. ca. 50 %, wobei sich solche Werte auf den jeweiligen Feststoffgehalt der Suspension beziehen.

Die Fraktionierung 3 lässt sich aber auch durch Verwendung einer Waschvorrichtung 30 betreiben, was in dem Anlagenschema der Fig. 4 gezeigt ist. Das Filtrat der Waschvorrichtung 30 ist dann die Feinfraktion F. Solche Waschvorrichtungen für Faserstoffe sind bekannt. Sie dienen dazu, nicht nur das Wasser vom Feststoff zu trennen (Filter), sondern sollen auch den Feststoff selbst fraktionieren. Eine besonders geeignete technische Ausführungsform und die bevorzugten Parameter sind z.B. in der Patentschrift DE 30 05 681 beschrieben. Bei einer solchen Waschvorrichtung wird die auszuwaschende Suspension S zwischen einen undurchlässigen Zylinder 31 und ein durchlässiges umlaufendes Siebband 32 mit geringer Konsistenz turbulent eingespritzt. Der zwischen Siebband 32 und Zylinder 31 entwässerte und gewaschene Faserstoff wird anschließend als Grobfraktion G in der bereits beschriebenen Art und Weise zur Eindickung 5 und Dispergierung 4 geführt. Es sind auch ähnlich arbeitende Vorrichtungen mit zwei umlaufenden Siebbändern bekannt. Ein Beispiel zeigt die EP 0 341 913.

Bekanntlich kann man Fasern aber auch in Hydrozyklonen fraktionieren, wobei eine Konsistenz zwischen 0,3 % und 0,7 % besonders günstig ist.

Auch die in Fig. 3 und 4 gezeigte Schneckenpresse 19 vor der Dispergierung 4 kann gleich oder in ähnlicher Form als Vorrichtung für die Fraktionierung 3 dienen. Da der eingedickte Stoff am Sieb der Schneckenpresse ständig bewegt wird, ist bei geringer Konsistenz auch hier eine Fraktionierung möglich, bei der also ein Teil der Kurzfasern oder zumindest der Faserfeinstoff zu größerem Anteil in die Feinfraktion F gelangt.

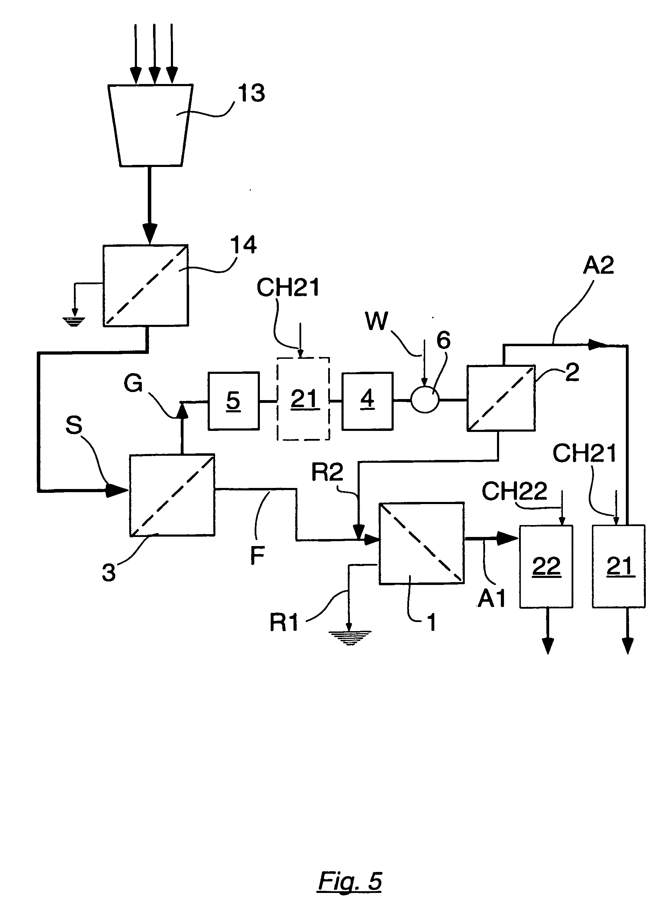

Wie in den Fig. 4 und 5 dargestellt, wird die Feinfraktion F der Fraktionierung 3 mit der dispergierten Grobfraktion G oder einem Teil davon nach der Wäsche 2 vermischt. Danach erfolgt nach Zugabe von Luft L die Flotation 1 in einer nur schematisch gezeichneten Flotationsanlage 20. Diese kann rejektseitig mehrere Stufen z.B. zwei aufweisen. In der Regel ist es nicht mehr erforderlich, eine weitere Flotation vorzusehen. Vielmehr bietet die Erfindung die Möglichkeit, weitere Flotationen einzusparen, da zumeist durch eine einzige Flotation 1 ein bereits voll befriedigendes Flotationsergebnis erzielbar ist. Auch eine bisher oft erforderliche Gesamtflotation vor der Fraktionierung kann entfallen, was zu einer beträchtlichen Einsparung führt. Der bei der Flotation 1 gebildete Flotationsschaum R1 wird entfernt und in die Rejektverarbeitung 8 geführt. Je nach Anlage kann die Rejektverarbeitung 8 in einer oder mehreren Flotationsstufen durchgeführt werden, wozu eine Anzahl verschiedener Schaltungsmöglichkeiten an sich bekannt ist.

Die Konsistenz der Grobfraktion G aus der Fraktionierung 3 wird durch Eindickung 5 auf einen Wert zwischen 15 und 25 % erhöht. Dazu ist hier exemplarisch eine Schneckenpresse 19 angedeutet; bekanntlich gibt es aber auch andere eventuell mehrstufig arbeitende Eindickungsapparaturen. Das Filtrat 10 aus dieser Eindickung 5 kann z.B. zur Bildung der Faserstoffsuspension S im Stofflöser 13 verwendet werden. Der eingedickte Stoff 11 gelangt dann über ein nicht gezeigtes Transportschneckensystem in einen Scheibendisperger 18, bei dem bekanntlich mit Zähnen versehene Dispergierwerkzeuge in einem kurzen Abstand relativ zueinander bewegt werden, die durch hohe Scherkräfte eine Dispergierung des hochkonsistenten Stoffes bewirken. Alternativ kann auch ein Kneter statt des Scheibendispergers verwendet werden. Normalerweise ist es zweckmäßig, den zur Dispergierung vorgesehenen hochkonsistenten Stoff zu erwärmen, z.B. auf eine Temperatur zwischen 80° und 95° C. Dazu kann, wie hier angedeutet, eine direkte Einspeisung von Dampf D in den Scheibendisperger 18 erfolgen. Die spezifische Arbeit, die bei der Dispergierung 4 auf den Faserstoff übertragen wird, wird üblicherweise auf einen Wert zwischen 30 und 120 kWh/t, vorzugsweise ca. 60 kWh/t, eingestellt.

Eine weitere Möglichkeit zur Dispergierung 4 der Grobfraktion G liegt in der Verwendung eines Kompressionsrefiners, der nach einem Verfahren arbeitet, das z.B. in der DE-A-102 36 962 beschrieben wird. Dieses Verfahren bringt eine sehr gute Dispergierung ohne Faserschädigung. Klebende Verunreinigungen (stickies) werden so zerkleinert, dass sie sich leichter flotieren oder auswaschen lassen. Diese Bearbeitung kann im Vergleich zum Scheibendisperger oder Kneter bei bedeutend geringerer Konsistenz, z.B. 6 - 8 %, durchgeführt werden, was apparativen und energetischen Aufwand einspart. Die spezifische Arbeit für diesen Zweck liegt dann z.B. bei etwa 30 bis 80 kWh/t.

Nach der Dispergierung 4 erfolgt eine Verdünnung 6 durch Zugabe von Wasser W, z.B. in einer Bütte.

Darüber hinaus zeigt das Anlagenbeispiel in Fig. 4 eine Ausgestaltung des Verfahrens, bei der der dispergierte Stoff einer Wäsche 2 zugeführt wird (siehe auch Fig. 1), für die in diesem Beispiel eine ähnliche oder gleiche Waschvorrichtung 30' verwendet wird, wie sie bereits an Hand der Fraktionierung 3 in derselben Anlage beschrieben ist. Das bei dieser Wäsche 2 gebildete Filtrat R2, das die bei der Dispergierung 4 abgelösten Druckfarben enthält, gelangt zusammen mit der Feinfraktion F der Fraktionierung 3 in die Flotation 1. Der Dickstoff A2 dieser Wäsche 2 ist bei günstiger Ausgestaltung des Verfahrens so weit von flotierbaren Verunreinigungen befreit, dass er zusammen mit dem Akzept A1 der Flotation 1 in die Stoffbütte 12 zur weiteren Bearbeitung geführt werden kann.

Besonders vorteilhaft kann das Verfahren ausgestaltet werden, wenn die aus der Fraktionierung 3 stammenden Fraktionen in unterschiedlichen Vorgängen zur Bleiche 21 bzw. 22 (s. Fig. 5) behandelt werden. Bekanntlich ist die Bleiche in vielen Fällen erforderlich, um bei Altpapierfasern den für die Erzeugung grafischer Papiere erforderlichen Weißgrad zu gewährleisten. Dabei sind die Chemikalienkosten ein wichtiger Aspekt. Mit Hilfe dieser Ausgestaltung des Verfahrens besteht die Möglichkeit, den Chemikalienbedarf auf die unterschiedlichen zu bleichenden Stoffe optimal abzustimmen. Das bedeutet beim Beispiel gemäß Fig. 5, dass für die Bleiche 21, in dem sich zur Hauptsache Langfasern aus der Grobfraktion G und wenig Fein- und Füllstoffe befinden, eine andere Chemikalienmischung CH 21 eingesetzt wird als die Chemikalienmischung CH 22 für die Bleiche 22 der aus der Feinfraktion F stammenden Stoffe. Letztere enthalten nämlich eine größere Menge von Faserbruchstücken und anorganischen Füllstoffen, die sich bei der gewünschten chemischen Reaktion mit der Chemikalienmischung CH 22 anders verhalten. Die Bleiche 21 kann alternativ zwischen Eindickung 5 und Dispergierung 4 erfolgen (gestrichelt gezeichnet).

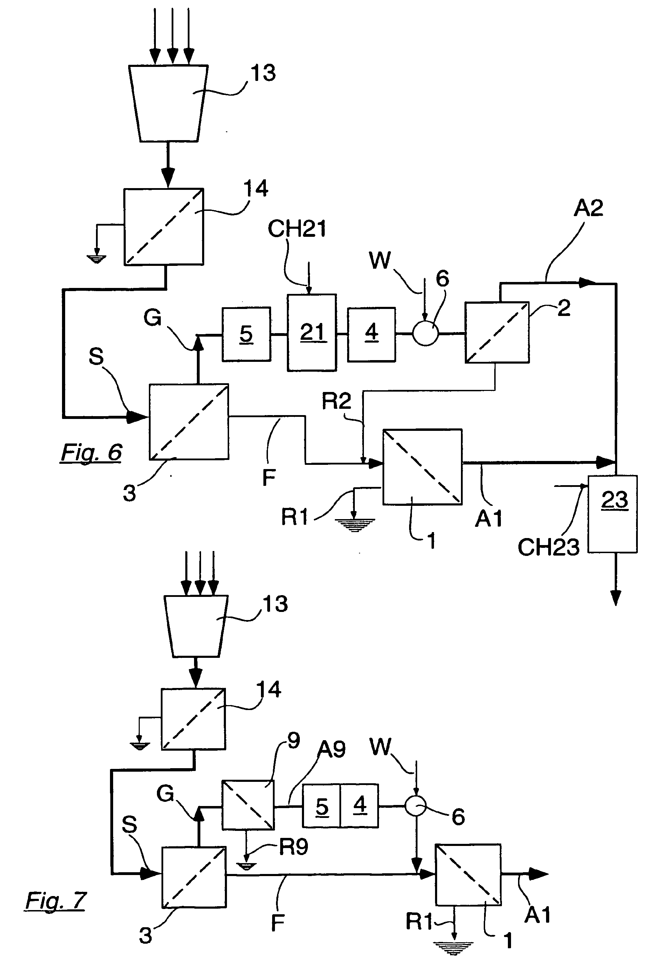

Die Bleiche der verschiedenen Fraktionen kann auch so erfolgen, wie in der Fig. 6 gezeigt wird. Dabei wird nach der Eindickung 5 der Grobfraktion G eine Bleiche 21 durchgeführt, was wegen der an dieser Stelle bereits vorliegenden hohen Konsistenz an sich schon besonders ökonomisch ist. Die Dispergierung 4 ist wegen der hohen Temperatur und der hohen Scherkräfte zur Durchführung einer besonders schnellen Bleiche gut geeignet. Da hier der Faseranteil sehr hoch und der Füllstoffanteil sehr gering ist, kann die Chemikalienmischung CH 21 besonders gut auf die Bleiche der eigentlichen Fasern, z.B. mit Peroxid oxidierend, eingestellt werden. Dieses Beispiel zeigt auch, dass es ohne weiteres sinnvoll sein kann, nach dem Zusammenführen der aus den beiden Fraktionen gebildeten Stoffströme eine gemeinsame Bleiche 23 durchzuführen. Die dazu verwendete Chemikalienmischung CH 23 kann dann wiederum auf die Eigenschaften eines solchen Stoffes optimal abgestimmt werden, z.B. reduzierend wirken.

Grundsätzlich ist bei der Aufbereitung der hier betrachteten Rohstoffen eine mehrfache Sortierung vorteilhaft. Dazu wurde bereits in der Beschreibung des in Fig. 1 gezeigten Schemas auf die Reinigungsanlage 14 hingewiesen, die als eine Art Vorsortierung angesehen werden kann. Die dabei als Gutstoff anfallende Faserstoffsuspension S ist also in gewisser Weise vorgereinigt, enthält aber dennoch eine größere Anzahl von Störstoffen, die nicht nur durch Flotation, sondern z.B. auch durch eine Feinsortierung entfernbar sind. Eine solche Feinsortierung kann sich z.B. in dem der Flotation 1 nachfolgenden hier nicht gezeichneten Teil der Aufbereitungsanlage anschließen. Eine andere Möglichkeit zeigt Fig. 7, nämlich eine Feinsortierung 9, in die die Grobfraktion G aus der Fraktionierung 3 eingeführt wird. Dabei wird die Tatsache genutzt, dass die genannten Störstoffe zum weit überwiegenden Teil bei der Fraktionierung 3 in die Grobfraktion G gelangen und aus dieser besonders ökonomisch entfernt werden können, da es sich hierbei um einen reduzierten Mengenstrom handelt. Die Feinsortierung 9 kann aus einer mehrstufigen Anlage bestehen, bei der also die Spuckstoffe wiederum einer Feinsortierung zugeführt werden. Solche Schaltungen sind an sich bekannt. Der Gutstoff A9 dieser Feinsortierung 9 wird in der Dispergierung 4 als relativ sauberer Stoff verarbeitet, was den Vorteil hat, dass aussortierbare Störstoffe dort nicht unnötigerweise in den Faserstoff hineingerieben werden. Selbstverständlich muss die Trenngrenze der hier beschriebenen Feinsortierung 9 so eingestellt sein (Größe und Form der Sieböffnungen, Art der Siebräumung), dass die Fasern nicht mit dem Spuckstoff R9 abgeführt, sondern in die nachfolgenden Stufen Eindickung 5 und Dispergierung 4 gelangen können.

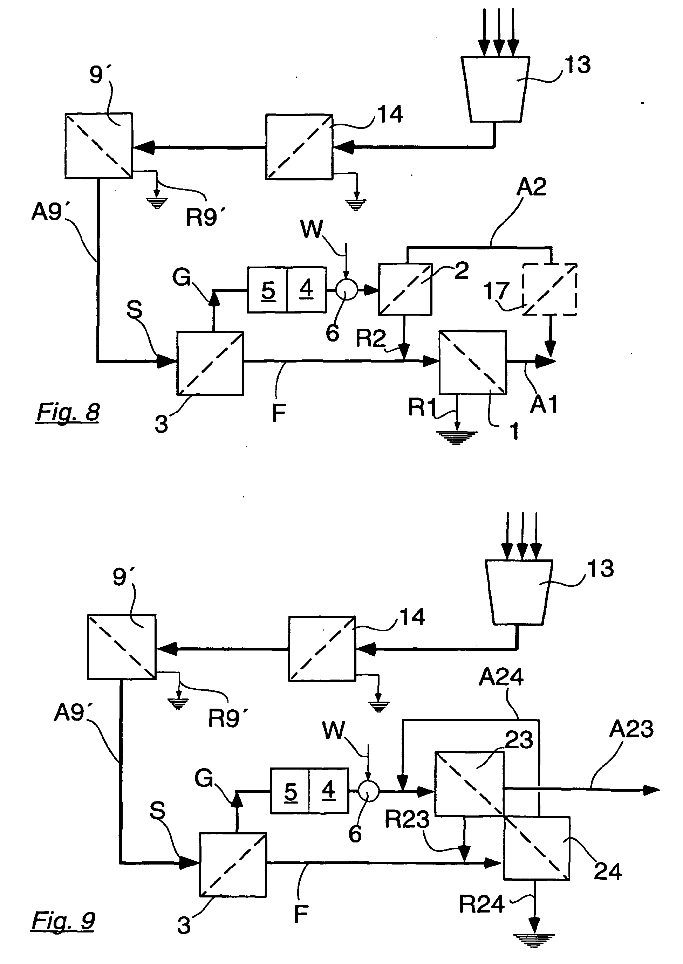

In einer anderen Form des Verfahrens gemäß Fig. 8 wird eine Feinsortierung 9' vor der Fraktionierung 3 durchgeführt. Der Gutstoff A9 ist dann frühzeitig von sortierbaren Störstoffen gereinigt.

Es ist in der Stoffaufbereitung für Papierstoffe bekannt und üblich, dass die Verfahrensschritte, die zur Abtrennung von unerwünschten Bestandteilen der Faserstoffsuspension durchgeführt werden, ein- oder mehrstufig ausgestaltet sind. Dabei ist mit "mehrstufig" gemeint, dass die Rejekte der ersten Stufe als Zulauf zur zweiten Stufe dienen, deren Rejekt dann entweder verworfen oder in mindestens eine weitere Stufe (z.B. dritte Stufe) geführt wird. Das hat den Vorteil, dass die Gutstoffe der ersten Stufe sauber sind und dass diese Sauberkeit nicht durch zu hohe Faserverluste erkauft werden muss. Mit anderen Worten: Die weiteren Stufen dienen der Rückgewinnung von verwertbaren Fasern, erhöhen also die Ausbeute des gesamten Verfahrens. In den Figuren dargestellte Reinigungsschritte, wie z.B. Reinigungsanlage 14, Hydrozyklon 15, Sortierer 16, können also auch mehrstufig ausgeführt sein. Der letzte Rejekt (Abfallsymbol) stammt dann jeweils aus der letzten Stufe.

Bei dem in Fig. 9 gezeigten Schema wird eine vorteilhafte Ausgestaltung des Verfahrens dargestellt, bei dem exemplarisch ausgehend von einer in Fig. 8 gezeigten Verfahrensvariante die Grobfraktion G der Fraktionierung 3 nach Eindickung 5, Dispergierung 4 und Verdünnung 6 in die erste Stufe 23 einer selektiven Flotation eingeführt wird. Der Rejekt R23 dieser ersten Stufe 23 wird zusammen mit der Feinfraktion F der Fraktionierung 3 in die zweite Stufe 24 derselben Flotationsanlage zugeführt. Der Akzept A24 der zweiten Stufe 24 gelangt in den Zulauf zur ersten Stufe 23. Der Rejekt R24 der zweiten Stufe 24 kann - wie hier gezeigt - als Rejekt verworfen werden (zumeist nach einer Eindickung). Selbstverständlich könnte sich hier auch eine dritte Stufe anschließen, was nicht gezeigt ist. Diese Verfahrensvariante hat den besonderen Vorteil einer Flotationsbehandlung aller Bestandteile, also der Grobfraktion G und Feinfraktion F. Außerdem sind die beiden Stufen 23 bzw. 24 der Flotationsanlage auf die speziellen Anforderungen der entsprechenden Stoffe einstellbar.

Insgesamt ist diese Anlage sowohl von dem apparativen als auch betrieblichen Aufwand günstig, insbesondere in der Wasserführung.

Das neue Verfahren ist so ausgestaltet , dass die nach der Fraktionierung 3 vorgenommene selektive Flotation die erste in der Aufbereitung ist. Neben den dadurch möglichen Einsparungen hat das den Vorteil, dass die Auflösung 13 schonender, z.B. auch mit weniger Chemikalien vorgenommen werden kann. Die Fraktionierung 3 führt die mit Druckfarben verbundenen Fasern in die Grobfraktion G, die dispergiert wird, wodurch gezielt eine Abtrennung erfolgt. Die dann folgende Wäsche oder Flotation entfernt die abgelösten Druckfarben.

## Patentansprüche

1. Verfahren zur Entfernung von Störstoffen aus einer wässrigen Faserstoffsuspension (S), insbesondere Altpapiersuspension,
wobei eine Fraktionierung (3) durchgeführt wird zur Bildung einer Feinfraktion (F) und einer Grobfraktion (G),
die Feinfraktion (F) flotiert wird, die Grobfraktion (G) dispergiert wird und mindestens ein Teil der Grobfraktion (G) nach dem Dispergieren (4) zusammen mit der Feinfraktion (F) in einer selektiven Flotation (1) behandelt wird,
**dadurch gekennzeichnet,**
**dass** die die Feinfraktion (F) und zumindest einen Teil der Grobfraktion (G) bearbeitende selektive Flotation (1) die erste selektive Flotation im Aufbereitungsverlauf des Verfahrens ist.

2. Verfahren nach Anspruch 1,
**dadurch gekennzeichnet,**
**dass** die Feinfraktion (F) bei der Fraktionierung (3) mit Kurzfasern und die Grobfraktion (G) mit Langfasern angereichert wird.

3. Verfahren nach Anspruch 1,
**dadurch gekennzeichnet,**
**dass** die Feinfraktion (F) bei der Fraktionierung (3) mit Feinstoffen und die Grobfraktion (G) mit Lang- und Kurzfasern angereichert wird.

4. Verfahren nach einem der voran stehenden Ansprüche,
**dadurch gekennzeichnet,**
**dass** die die Feinfraktion (F) und zumindest einen Teil der Grobfraktion (G) bearbeitende selektive Flotation (1) die einzige selektive Flotation im Aufbereitungsverlauf des Verfahrens ist.

5. Verfahren nach einem der voran stehenden Ansprüche,
**dadurch gekennzeichnet,**
**dass** die Grobfraktion (G) nach der Dispergierung (4) einer Wäsche (2) unterzogen wird.

6. Verfahren nach Anspruch 5,
**dadurch gekennzeichnet,**
**dass** das Filtrat (R2) der Wäsche (2) in die Flotation (1) geführt wird.

7. Verfahren nach einem der voran stehenden Ansprüche,
**dadurch gekennzeichnet,**
**dass** die Grobfraktion (G) nach der Dispergierung (4) in der 1. Stufe einer mindestens zweistufigen selektiven Flotation gereinigt wird.

8. Verfahren nach Anspruch 7,
**dadurch gekennzeichnet,**
**dass** der Gutstoff (A23) der 1. Stufe (23) ohne weitere selektive Flotation weiter verarbeitet wird.

9. Verfahren nach Anspruch 7 oder 8,
**dadurch gekennzeichnet,**
**dass** der Rejekt (R23) der 1. Stufe (23) in die zweite Stufe (24) derselben Flotation eingeführt und darin zusammen mit der Feinfraktion (F) der Fraktionierung (3) gereinigt wird.

10. Verfahren nach einem der voran stehenden Ansprüche,
**dadurch gekennzeichnet,**
**dass** die Flotation (1) bei einer Konsistenz zwischen 0,8 und 2,5 %, vorzugsweise 1,0 bis 2 %, durchgeführt wird.

11. Verfahren nach einem der voran stehenden Ansprüche,
**dadurch gekennzeichnet,**
**dass** die Dispergierung (4) in einem Scheibendisperger oder Kneter bei einer Konsistenz zwischen 15 und 35 % durchgeführt wird.

12. Verfahren nach einem der Ansprüche 1 bis 10,
**dadurch gekennzeichnet,**
**dass** die Dispergierung (4) durch Kompressionsmahlung erfolgt.

13. Verfahren nach Anspruch 11 oder 12,
**dadurch gekennzeichnet,**
**dass** die bei der Dispergierung (4) übertragene spezifische Arbeit zwischen 30 und 120 kWh/t, vorzugsweise ca. 60 kWh/t, liegt.

14. Verfahren nach einem der voran stehenden Ansprüche,
**dadurch gekennzeichnet,**
**dass** die Fraktionierung (3) bei einer Konsistenz zwischen 0,6 und 4 % durchgeführt wird.

15. Verfahren nach einem der voran stehenden Ansprüche,
**dadurch gekennzeichnet,**
**dass** die Fraktionierung (3) mit einem Drucksortierer durchgeführt wird, der mit mindestens einem Sieb ausgestattet ist.

16. Verfahren nach Anspruch 15,
**dadurch gekennzeichnet,**
**dass** die Öffnungen im Sieb Schlitze sind, die eine Schlitzweite zwischen 0,08 und 0,3 mm, vorzugsweise 0, 1 bis 0,15 mm, haben.

17. Verfahren nach einem der Ansprüche 1 bis 15,
**dadurch gekennzeichnet,**
**dass** die Öffnungen im Sieb Löcher sind.

18. Verfahren nach Anspruch 17,
**dadurch gekennzeichnet,**
**dass** die Öffnungen im Sieb Rundlöcher sind, die einen Durchmesser zwischen 0,1 mm und 2 mm haben, vorzugsweise 0,3 mm bis 1,0 mm.

19. Verfahren nach einem der Ansprüche 1 bis 13,
**dadurch gekennzeichnet,**
**dass** die Fraktionierung (3) in zumindest teilweise Hydrozyklonen bei einer Konsistenz zwischen 0,1 und 2 %, vorzugsweise 0,3 - 0,7 %, durchgeführt wird.

20. Verfahren nach einem der Ansprüche 1 bis 13,
**dadurch gekennzeichnet,**
**dass** die Fraktionierung (3) in einer Waschvorrichtung (30) durchgeführt wird.

21. Verfahren nach einem der Ansprüche 1 bis 13,
**dadurch gekennzeichnet,**
**dass** die Fraktionierung (3) in einer Schneckenpresse durchgeführt wird.

22. Verfahren nach einem der voran stehenden Ansprüche,
**dadurch gekennzeichnet,**
**dass** die Fraktionierung (3) so eingestellt wird, dass eine Feinfraktion (F) gebildet wird; deren Feststoffanteil höchstens 50 % des Feststoffanteils der der Fraktionierung (3) zugeführten Faserstoffsuspension (S) beträgt.

23. Verfahren nach Anspruch 22,
**dadurch gekennzeichnet,**
**dass** die Fraktionierung (3) so eingestellt wird, dass eine Feinfraktion (F) gebildet wird, deren Feststoffanteil höchstens 40 % des Feststoffanteils der der Fraktionierung (3) zugeführten Faserstoffsuspension (S) beträgt.

24. Verfahren nach Anspruch 23,
**dadurch gekennzeichnet,**
**dass** die Fraktionierung (3) so eingestellt wird, dass eine Feinfraktion (F) gebildet wird, deren Feststoffanteil höchstens 30 % des Feststoffanteils der der Fraktionierung (3) zugeführten Faserstoffsuspension (S) beträgt.

25. Verfahren nach Anspruch 24,
**dadurch gekennzeichnet,**
**dass** die Fraktionierung (3) so eingestellt wird, dass eine Feinfraktion (F) gebildet wird, deren Feststoffanteil höchstens 20 % des Feststoffanteils der der Fraktionierung (3) zugeführten Faserstoffsuspension (S) beträgt.

26. Verfahren nach einem der voran stehenden Ansprüche,
**dadurch gekennzeichnet,**
**dass** die Fraktionierung (3) so eingestellt wird, dass eine Feinfraktion (F) gebildet wird, deren Feststoffanteil mindestens 10 %, vorzugsweise mindestens 20 % des Feststoffanteils, der der Fraktionierung (3) zugeführten Faserstoffsuspension (S) beträgt.

27. Verfahren nach einem der voran stehenden Ansprüche,
**dadurch gekennzeichnet,**
**dass** der Anteil der Fasern in der Feinfraktion (F) kleiner ist als 50 %.

28. Verfahren nach Anspruch 27,
**dadurch gekennzeichnet,**
**dass** der Anteil der Fasern in der Feinfraktion (F) kleiner ist als 30 %.

29. Verfahren nach Anspruch 28,
**dadurch gekennzeichnet,**
**dass** der Anteil der Fasern in der Feinfraktion (F) kleiner ist als 10 %, vorzugsweise 5 %.

30. Verfahren nach einem der voran stehenden Ansprüche,
**dadurch gekennzeichnet,**
**dass** der Gutstoff (A1) der Flotation (1) in einer Bleiche (22, 23) behandelt wird, wozu eine Chemikalienmischung (CH22, CH23) zugegeben wird.

31. Verfahren nach einem der voran stehenden Ansprüche,
**dadurch gekennzeichnet,**
**dass** die Grobfraktion (G) in einer Bleiche (21) unter Zugabe einer Chemikalienmischung (CH 21) behandelt wird.

32. Verfahren nach einem der Ansprüche 30 oder 31,
**dadurch gekennzeichnet,**
**dass** sich die Chemikalienmischungen (CH21, CH22, CH23) voneinander bezüglich der Menge unterscheiden.

33. Verfahren nach einem der Ansprüche 30, 31 oder 32,
**dadurch gekennzeichnet,**
**dass** sich die Chemikalienmischungen (CH21, CH22, CH23) voneinander bezüglich der Zusammensetzung unterscheiden.

34. Verfahren nach Anspruch 30, 31, 32 oder 33,
**dadurch gekennzeichnet,**
**dass** eine Bleiche (21) vor oder während der Dispergierung (4) durchgeführt wird.

35. Verfahren nach Anspruch 31, 32 oder 33 in Verbindung mit Anspruch 5 oder 6,
**dadurch gekennzeichnet,**
**dass** eine Bleiche (21) an dem Gutstoff (A2) der Wäsche (2) durchgeführt wird.

36. Verfahren nach Anspruch 31, 32 oder 33 in Verbindung mit Anspruch 5 oder 6,
**dadurch gekennzeichnet,**
**dass** eine Bleiche (23) durchgeführt wird, in der sowohl der Gutstoff (A2) der Wäsche (2) als auch der Gutstoff (A1) der Flotation (1) gebleicht werden.

37. Verfahren nach einem der voran stehenden Ansprüche,
**dadurch gekennzeichnet,**
**dass** vor der Fraktionierung (3) eine Feinsortierung (9') durchgeführt wird.

38. Verfahren nach einem der Ansprüche 1 bis 36,
**dadurch gekennzeichnet,**
**dass** die Grobfraktion (G) in einer Feinsortierung (9) gereinigt wird.

39. Verfahren nach Anspruch 37 oder 38,
**dadurch gekennzeichnet,**
**dass** die Feinsortierung (9, 9') mit einem Schlitzsieb durchgeführt wird, dessen Schlitzweite 0,1 bis 0,3 mm beträgt.

## Claims

1. Method for removing impurities from an aqueous fibre suspension (S), in particular a waste paper suspension,
fractionation (3) being carried out in order to form a fine fraction (F) and a coarse fraction (G),
the fine fraction (F) being floated, the coarse fraction (G) being dispersed and, following the dispersion (4), at least part of the coarse fraction (G) being treated together with the fine fraction (F) in a selective flotation stage (1),
**characterized in that**
the selective flotation (1) processing the fine fraction (F) and at least part of the coarse fraction (G) being the first selective flotation in the preparation sequence of the method.

2. Method according to Claim 1,
**characterized in that**
during the fractionation (3), the fine fraction (F) is enriched with short fibres and the coarse fraction (G) is enriched with long fibres.

3. Method according to Claim 1,
**characterized in that**
during the fractionation (3), the fine fraction (F) is enriched with fines and the coarse fraction (G) is enriched with long and short fibres.

4. Method according to one of the preceding claims,
**characterized in that**
the selective flotation (1) processing the fine fraction (F) and at least part of the coarse fraction (G) is the single selective flotation in the preparation sequence of the method.

5. Method according to one of the preceding claims,
**characterized in that**
following the dispersion (4), the coarse fraction (G) is subjected to washing (2).

6. Method according to Claim 5,
**characterized in that**
the filtrate (R2) from the washing (2) is led into the flotation (1).

7. Method according to one of the preceding claims,
**characterized in that**
following the dispersion (4), the coarse fraction (G) is cleaned in the first stage of an at least two-stage selective flotation.

8. Method according to Claim 7,
**characterized in that**
the accepts (A23) from the first stage (23) are processed further without further selective flotation.

9. Method according to Claim 7 or 8,
**characterized in that**
the rejects (R23) from the first stage (23) are introduced into the second stage (24) of the same flotation and, therein, are cleaned together with the fine fraction (F) from the fractionation (3).

10. Method according to one of the preceding claims,
**characterized in that**
the flotation (1) is carried out at a consistency between 0.8 and 2.5%, preferably 1.0 to 2%.

11. Method according to one of the preceding claims,
**characterized in that**
the dispersion (4) is carried out in a disc disperger or kneader at a consistency between 15 and 35%.

12. Method according to one of Claims 1 to 10,
**characterized in that**
the dispersion (4) is carried out by means of compression refining.

13. Method according to Claim 11 or 12,
**characterized in that**
the specific work transferred during the dispersion (4) lies between 30 and 120 kWh/t, preferably about 60 kWh/t.

14. Method according to one of the preceding claims,
**characterized in that**
the fractionation (3) is carried out at a consistency between 0.6 and 4%.

15. Method according to one of the preceding claims,
**characterized in that**
the fractionation (3) is carried out by using a pressure screen which is equipped with at least one screen.

16. Method according to Claim 15,
**characterized in that**
the openings in the screen are slots which have a slot width between 0.08 and 0.3 mm, preferably 0.1 to 0.15 mm.

17. Method according to one of Claims 1 to 15,
**characterized in that**
the openings in the screen are holes.

18. Method according to Claim 17,
**characterized in that**
the openings in the screen are round holes which have a diameter between 0.1 mm and 2 mm, preferably 0.3 mm to 1.0 mm.

19. Method according to one of Claims 1 to 13,
**characterized in that**
the fractionation (3) is carried out at least partly in hydrocyclones at a consistency between 0.1 and 2%, preferably 0.3 - 0.7%.

20. Method according to one of Claims 1 to 13,
**characterized in that**
the fractionation (3) is carried out in a washing apparatus (30).

21. Method according to one of Claims 1 to 13,
**characterized in that**
the fractionation (3) is carried out in a screw press.

22. Method according to one of the preceding claims,
**characterized in that**
the fractionation (3) is adjusted such that a fine fraction (F) is formed whose proportion of solids is at most 50% of the proportion of solids of the fibre suspension (S) fed into the fractionation (3).

23. Method according to Claim 22,
**characterized in that**
the fractionation (3) is adjusted such that a fine fraction (F) is formed whose proportion of solids is at most 40% of the proportion of solids of the fibre suspension (S) fed into the fractionation (3).

24. Method according to Claim 23,
**characterized in that**
the fractionation (3) is adjusted such that a fine fraction (F) is formed whose proportion of solids is at most 30% of the proportion of solids of the fibre suspension (S) fed into the fractionation (3).

25. Method according to Claim 24,
**characterized in that**
the fractionation (3) is adjusted such that a fine fraction (F) is formed whose proportion of solids is at most 20% of the proportion of solids of the fibre suspension (S) fed into the fractionation (3).

26. Method according to one of the preceding claims,
**characterized in that**
the fractionation (3) is adjusted such that a fine fraction (F) is formed whose proportion of solids is at least 10%, preferably at least 20%, of the proportion of solids of the fibre suspension (S) fed into the fractionation (3).

27. Method according to one of the preceding claims,
**characterized in that**
the proportion of fibres in the fine fraction (F) is less than 50%.

28. Method according to Claim 27,
**characterized in that**
the proportion of fibres in the fine fraction (F) is less than 30%.

29. Method according to Claim 28,
**characterized in that**
the proportion of fibres in the fine fraction (F) is less than 10%, preferably 5%.

30. Method according to one of the preceding claims,
**characterized in that**
the accepts (A1) from the flotation (1) are treated in a bleaching stage (22, 23), for which purpose a mixture of chemicals (CH22, CH23) is added.

31. Method according to one of the preceding claims,
**characterized in that**
the coarse fraction (G) is treated in a bleaching stage (21) with the addition of a mixture of chemicals (CH21).

32. Method according to either of Claims 30 and 31,
**characterized in that**
the mixtures of chemicals (CH21, CH22, CH23) differ from one another with respect to the quantity.

33. Method according to one of Claims 30, 31 or 32,
**characterized in that**
the mixtures of chemicals (CH21, CH22, CH23) differ from one another with respect to the composition.

34. Method according to Claim 30, 31, 32 or 33,
**characterized in that**
bleaching (21) is carried out before or during the dispersion (4).

35. Method according to Claim 31, 32 or 33 in conjunction with Claim 5 or 6,
**characterized in that**
bleaching (21) is carried out on the accepts (A2) from the washing (2).

36. Method according to Claim 31, 32 or 33 in conjunction with Claim 5 or 6,
**characterized in that**
bleaching (23) is carried out, in which both the accepts (A2) from the washing (2) and the accepts (A1) from the flotation (1) are bleached.

37. Method according to one of the preceding claims,
**characterized in that**
before the fractionation (3), fine screening (9') is carried out.

38. Method according to one of Claims 1 to 36,
**characterized in that**
the coarse fraction (G) is cleaned in a fine screening stage (9).

39. Method according to Claim 37 or 38,
**characterized in that**
the fine screening (9, 9') is carried out by using a slotted screen whose slot width is 0.1 to 0.3 mm.

## Revendications

1. Procédé d'enlèvement des matières perturbatrices d'une suspension aqueuse (S) de fibres, en particulier d'une suspension de vieux papiers,
dans lequel on réalise un fractionnement (3) en vue de former une fraction fine (F) et une fraction grossière (G),
la fraction fine (F) étant flottée, la fraction grossière (G) étant dispersée et au moins une partie de la fraction grossière (G) étant traitée par flottation sélective (1) après la dispersion (4), en même temps que la fraction fine (F),
**caractérisé en ce que**
la flottation sélective (1) qui traite la fraction fine (F) et au moins une partie de la fraction grossière (G) est la première flottation sélective dans le déroulement du traitement du procédé.

2. Procédé selon la revendication 1, **caractérisé en ce que** lors du fractionnement (3), la fraction fine (F) est enrichie en fibres courtes et la fraction grossière (G) en fibres longues.

3. Procédé selon la revendication 1, **caractérisé en ce que** lors du fractionnement (3), la fraction fine (F) est enrichie en matières fines et la fraction grossière (G) en fibres longues et en fibres courtes.

4. Procédé selon l'une des revendications précédentes, **caractérisé en ce que** la flottation sélective (1) qui traite la fraction fine (F) et au moins une partie de la fraction grossière (G) est la seule flottation sélective dans le déroulement de traitement du procédé.

5. Procédé selon l'une des revendications précédentes, **caractérisé en ce qu'**après la dispersion (4), la fraction grossière (G) subit un lavage (2).

6. Procédé selon la revendication 5, **caractérisé en ce que** le filtrat (R2) du lavage (2) est renvoyé dans la flottation (1).

7. Procédé selon l'une des revendications précédentes, **caractérisé en ce qu'**après la dispersion (4), la fraction grossière (G) est épurée dans le 1er étage d'une flottation sélective à au moins deux étages.

8. Procédé selon la revendication 7, **caractérisé en ce que** le traitement de la matière retenue (A23) dans le 1er étage (23) se poursuit sans autre flottation sélective.

9. Procédé selon les revendications 7 ou 8, **caractérisé en ce que** le rejet (R23) du 1er étage (23) est injecté dans le deuxième étage (24) de la même flottation et y est épuré en même temps que la fraction fine (F) du fractionnement (3).

10. Procédé selon l'une des revendications précédentes, **caractérisé en ce que** la flottation (1) est effectuée à une consistance comprise entre 0,8 et 2,5 % et de préférence de 1,0 à 2 %.

11. Procédé selon l'une des revendications précédentes, **caractérisé en ce que** la dispersion (4) est réalisée dans un disperseur à disque ou un pétrin, à une consistance comprise entre 15 et 35 %.

12. Procédé selon l'une des revendications 1 à 10, **caractérisé en ce que** la dispersion (4) s'effectue par broyage sous compression.

13. Procédé selon les revendications 11 ou 12, **caractérisé en ce que** le travail spécifique injecté lors de la dispersion (4) est compris entre 30 et 120 kWh/t et est de préférence d'environ 60 kWh/t.

14. Procédé selon l'une des revendications précédentes, **caractérisé en ce que** le fractionnement (3) est réalisé à une consistance comprise entre 0,6 et 4 %.

15. Procédé selon l'une des revendications précédentes, **caractérisé en ce que** le fractionnement (3) est réalisé à l'aide d'un classificateur sous pression équipé d'au moins un tamis.

16. Procédé selon la revendication 15, **caractérisé en ce que** les ouvertures du tamis sont des fentes dont la largeur est comprise entre 0,08 et 0, 3 mm et de préférence entre 0,1 et 0,15 mm.

17. Procédé selon l'une des revendications 1 à 15, **caractérisé en ce que** les ouvertures ménagées dans le tamis sont des trous.

18. Procédé selon la revendication 17, **caractérisé en ce que** les ouvertures ménagées dans le tamis sont des trous circulaires dont le diamètre est compris entre 0,1 mm et 2 mm et de préférence entre 0,3 mm et 1,0 mm.

19. Procédé selon l'une des revendications 1 à 13, **caractérisé en ce que** le fractionnement (3) est réalisé au moins en partie dans des hydrocyclones, à une consistance comprise entre 0,1 et 2 % et de préférence entre 0,3 et 0,7 %.

20. Procédé selon l'une des revendications 1 à 13, **caractérisé en ce que** le fractionnement (3) est réalisé dans un dispositif de lavage (30).

21. Procédé selon l'une des revendications 1 à 13, **caractérisé en ce que** le fractionnement (3) est réalisé dans une presse à vis.

22. Procédé selon l'une des revendications précédentes, **caractérisé en ce que** le fractionnement (3) est ajusté de manière à former une fraction fine (F) dont la teneur en solides représente au plus 50 % de la teneur en solides de la suspension (S) de fibres amenée au fractionnement (3).

23. Procédé selon la revendication 22, **caractérisé en ce que** le fractionnement (3) est réglé de manière à former une fraction fine (F) dont la teneur en solides représente au plus 40 % de la teneur en solides de la suspension (S) de fibres amenée au fractionnement (3).

24. Procédé selon la revendication 23, **caractérisé en ce que** le fractionnement (3) est réglé de manière à former une fraction fine (F) dont la teneur en solides représente au plus 30 % de la teneur en solides de la suspension (S) de fibres amenée au fractionnement (3).

25. Procédé selon la revendication 24, **caractérisé en ce que** le fractionnement (3) est réglé de manière à former une fraction fine (F) dont la teneur en solides représente au plus 20 % de la teneur en solides de la suspension (S) de fibres amenée au fractionnement (3).

26. Procédé selon l'une des revendications précédentes, **caractérisé en ce que** le fractionnement (3) est réglé de manière à former une fraction fine (F) dont la teneur en solides représente au moins 10 % et de préférence au moins 20 % de la teneur en solides de la suspension (S) de fibres amenée au fractionnement (3).

27. Procédé selon l'une des revendications précédentes, **caractérisé en ce que** la teneur en fibres de la fraction fine (F) est inférieure à 50 %.

28. Procédé selon la revendication 27, **caractérisé en ce que** la teneur en fibres de la fraction fine (F) est inférieure à 30 %.

29. Procédé selon la revendication 28, **caractérisé en ce que** la teneur en fibres de la fraction fine (F) est inférieure à 10 % et est de préférence de 5 %.

30. Procédé selon l'une des revendications précédentes, **caractérisé en ce que** le produit (A1) retenu lors de la flottation (1) est traité dans un bain de blanchiment (22, 23) auquel on ajoute un mélange (CH22, CH23) de produits chimiques.

31. Procédé selon l'une des revendications précédentes, **caractérisé en ce que** la fraction grossière (G) est traitée dans un bain de blanchiment (21) avec addition d'un mélange (CH21) de produits chimiques.

32. Procédé selon l'une des revendications 30 ou 31, **caractérisé en ce que** les quantités de produits chimiques (CH21, CH22, CH23) sont différentes les unes des autres.

33. Procédé selon l'une des revendications 30, 31 ou 32, **caractérisé en ce que** les mélanges (CH21, CH22, CH23) de produits chimiques ont des compositions différentes.

34. Procédé selon les revendications 30, 31, 32 ou 33, **caractérisé en ce qu'**un blanchiment (21) est réalisé avant ou pendant la dispersion (4).

35. Procédé selon les revendications 31, 32 ou 33, en combinaison avec les revendications 5 ou 6, **caractérisé en ce qu'**un blanchiment (21) est réalisé sur le produit (A2) retenu lors du lavage (2).

36. Procédé selon les revendications 31, 32 ou 33 associées aux revendications 5 ou 6, **caractérisé en ce qu'**on réalise un blanchiment (23) dans lequel à la fois le produit (A2) retenu lors du lavage (2) et le produit (A1) retenu lors de la flottation (1) sont blanchis.

37. Procédé selon l' une des revendications précédentes, **caractérisé en ce qu'**un tri (9') des fines est réalisé avant le fractionnement (3).

38. Procédé selon l'une des revendications 1 à 36, **caractérisé en ce que** la fraction grossière (G) est épurée dans un tri (9) des fines.

39. Procédé selon les revendications 37 ou 38, **caractérisé en ce que** le tri (9, 9') des fines est réalisé à l'aide d'un tamis à fentes dont les fentes ont une largeur de 0,1 à 0,3 mm.
